# EUROPEAN PATENT SPECIFICATION

(11) **EP 1 778 543 B1**
(45) Date of publication and mention of the grant of the patent: **12.01.2011**
(21) Application number: 05771877.7
(22) Date of filing: 11.08.2005
(51) Int. Cl.: B64D 37/32

(54) **AIR SUPPLY DEVICE AND METHOD FOR AN INERT GAS GENERATING SYSTEM IN AN AIRCRAFT**
LUFTZUFUHRANORDNUNG UND VERFAHREN FÜR EIN INERTGASERZEUGUNGSSYSTEM EINES FLUGZEUGES
DISPOSITIF ET PROCEDE D'ALIMENTATION EN AIR POUR UN SYSTEME DE PRODUCTION DE GAZ INERTE DANS EN AERONEF

(30) Priority: 16.08.2004 DE 102004039667; 16.08.2004 US 601951 P
(43) Date of publication of application: 02.05.2007
(73) Proprietor: Airbus Operations GmbH, 21129 Hamburg (DE)
(72) Inventor: SCHERER, Thomas, 22559 Hamburg (DE); SCHMIDT, Rüdiger, 21717 Fredenbeck (DE); SOLNTSEV, Alexander, 22119 Hamburg (DE)
(74) Representative: Kopf, Korbinian Paul
(86) International application number: PCT/EP2005/008749
(87) International publication number: WO 2006/018226

(56) References cited:
- US-A- 5 069 692
- US-A1- 2003 005 718
- US-A1- 2004 065 383

## Description

This application claims the benefit of the filing date of United States Provisional Patent Application No 60/601,951 filed August 16, 2004 and of the German Patent Application No 10 2004 039 667.1 filed August 16, 2004.

The present invention relates to the air supply in an aircraft. In particular, the present invention relates to an air supply device for a system for generating inert gas in an aircraft, a method for the air supply of a system for generating inert gas in an aircraft, the use of a corresponding air supply device in an aircraft, as well as an aircraft comprising a corresponding air supply device.

In aircraft, so-called on-board inert gas generation systems (OBIGGS), i.e. systems for generating inert gas in an aircraft, are used. These OBIGGS systems serve for example to generate nitrogen, which is used for displacing the oxygen from the fuel tanks. Cooled bleed air (Zapfluft) from engines or from auxiliary turbines (APUs) is used as a source of air for generating inert gas. The hot bleed air, which has a temperature of 200 °C, has to be cooled down to a particular temperature and has to be relaxed to a particular pressure. A conventional solution provides for an air-cooled heat exchanger in which the bleed air is cooled. The quantity of bleed air and the pressure are regulated with the use of a shut-off valve. For the purpose of cooling, external air is used, which when the aircraft is in flight is provided as ram air by the ram-air channel, while when the aircraft is on the ground is provided by an additional device (fan, jet pump). The temperature of the bleed air for the OBIGGS is regulated by means of a bypass valve and the temperature sensor.

The conventional solution for preparing bleed air for the OBIGGS provides for a separate air-cooled heat exchanger and a separate ram-air channel with the additional equipment of a fan or jet pump for ground operation. The presence of the separate heat exchangers and of the ram-air channel has the consequence of additional weight for the aircraft. Installation of the separate heat exchangers and the ran-air channel in an existing aircraft can be associated with enormous problems. The additional ram-air channel causes additional aircraft resistance in flight. Two additional openings (inlet and outlet of the ram-air channel) weaken the structure and thus require corresponding reinforcement and result in additional weight. The additional heat exchanger requires increased maintenance effort.

US 2003/0005718 A1 discloses an aircraft air conditioner having a cooling device for cooling air extracted from an engine before feeding it into a cabin. A mixture of re-circulated air and the extracted air is fed into an air separating section in which a selectively permeable membrane separates the air flowing through into nitrogen-enriched gas and oxygen-concentrated air. The nitrogen-enriched gas is capable of being fed into a fuel peripheral region of the aircraft and the oxygen-concentrated air is capable of being fed into the cabin.

It is an object of the present invention to provide an improved air supply for a system for generating inert gas (OBIGGS) in an aircraft, which in particular does not require an additional ram-air channel.

This object is solved by means of an air supply device for a system for generating inert gas in an aircraft, comprising the features of claim 1 and a method for supplying air to a system for generating inert gas in an aircraft comprising the steps of claims 12.

By bleeding air from the air conditioning unit, which air is subsequently provided to the OBIGGS system, the supply of correspondingly cooled bleed air to the OBIGGS can be ensured both on the ground and in flight, without the need for providing additional ram-air channels for cooling. Thus, additional air resistance during flight, which additional air resistance would result from an additional ram-air channel, can be avoided. In particular, retrofitting of the device according to the invention is thus facilitated significantly. Furthermore, since no additional inlet and outlet of the additional ram-air channel have to be provided (because there is no additional ram-air channel), there is no weakening of the structure as a result of two additional openings. No further reinforcement is thus required, and more weight is saved.

Advantageously, with this device and method it can thus be ensured that the air that is fed to the OBIGGS system has a temperature which is between the first and the second temperature. This mixing temperature can be set accordingly by varying the mixing ratio.

Further, with this solution redundancy of the air conditioning units can be ensured so that a safe and reliable supply of correspondingly temperature-controlled and pressurised air to the OBIGGS is largely ensured.

According to a further embodiment of the present invention, as stated in claim 3, the first temperature is higher than the temperature required for the system for generating inert gas. Furthermore, the second temperature is lower than the temperature required for the system for generating inert gas, and a first pressure of the first bled air and a second pressure of the second bled air is higher than a pressure required for the system for generating inert gas.

This advantageously ensures that the temperature required for the OBIGGS system can be adjusted by mixing the first and the second bled air. Furthermore, because both the first pressure and the second pressure are greater than the pressure required for the OBIGGS system there is no need to install a corresponding pressure build-up element, such as for example a pump, in the air supply device. The pressure required for the OBIGGS system is adjusted by the corresponding valve (13).

According to a further embodiment of the present invention, as stated in claim 4, the first bleed position is arranged at an exit of a compressor of the first air conditioning unit, and the second bleed position is arranged at an exit of a main heat exchanger of the first air conditioning unit.

Advantageously, this makes possible simple bleeding of air from the air conditioning unit. It is particularly advantageous that the air at the compressor exit and the air at the main heat exchanger exit (exit of the main heat exchanger) has preferred temperatures and pressures.

According to a further embodiment of the present invention, as stated in claim 6, the air supply device further comprises a first valve or a first temperature sensor, wherein by way of the first valve a mixing ratio of first bled air to second bled air or a total quantity of first bled air and second bled air is controllable or regulable, and wherein a fifth temperature is measurable by way of the first temperature sensor. The fifth temperature is the temperature of the air fed to the system for generating inert gas. In this arrangement, an air supply to the system for generating inert gas can be blocked off by way of the first valve.

Advantageously, it is thus possible to freely select the mixing ratio of the first bled air and the second bled air so that the temperature of the resulting mixed air is adjustable. Furthermore, blocking off the air supply to the OBIGGS can take place by way of the first valve, so that for example in the case of malfunction of the air conditioning unit a flow of very hot air from the air conditioning unit can be stopped. Advantageously, in this arrangement the temperature of the mixed air fed to the OBIGGS system is detectable by way of the temperature sensor so that the mixing ratio can be regulated accordingly.

According to a further embodiment of the present invention, as stated in claim 7, the air supply device further comprises a second valve, wherein by way of the second valve the total quantity of first bled air and second bled air is controllable or regulable and wherein if the first valve (11) should fail, the second valve (13) takes over shutoff of the air supply to the OBIGGS of the first valve (11) and vice-versa.

Thus, blocking off the air supply to the OBIGGS can take place by way of the second valve so that for example in the case of a malfunction of the air conditioning unit a flow of very hot air from the air conditioning unit can be stopped.

Advantageously, redundancy of valve control is thus provided so that even in the case of failure of one of the two valves (first valve or second valve) the blocking off of the mixed air fed to the OBIGGS system still takes place.

According to a further embodiment of the present invention, as stated in claim 8, the air supply device further comprises a first controller and a second controller, wherein the first controller is of a design that differs from that of the design of the second controller, and wherein the first or the second controller controls or regulates the first valve or the second valve, or measures the fifth temperature. In this arrangement, should the first controller fail, the second controller takes over the functions of the first controller.

This means that reliable control is ensured, even in the case of a critical situation on board the aircraft, as can occur for example if one or several systems fails or fail, due to controller redundancy (which is for example reflected in multiple units, different design types and different locations of the individual controllers).

According to a further embodiment of the present invention, as stated in claim 9, a second temperature sensor is provided which in the case of failure of the first temperature sensor takes over the function of the first temperature sensor.

Advantageously, redundancy of the temperature sensors ensures reliable temperature measurement even in the case of partial system failure.

Further objects, embodiments and advantages of the invention are stated in the dependent claims and in the further independent claims.

In the following, preferred embodiments of the present invention are described with reference to the figures.
Fig. 1 shows a schematic representation of an air supply device.
Fig. 2 shows a schematic representation of an air conditioning unit.
Fig. 3 shows a schematic representation of an air supply device according to an embodiment of the present invention.
Fig. 4 shows an interrelationship between pressure and temperature at various positions within an air conditioning unit.

In the following description of the figures, the same reference characters are used for identical or similar elements.

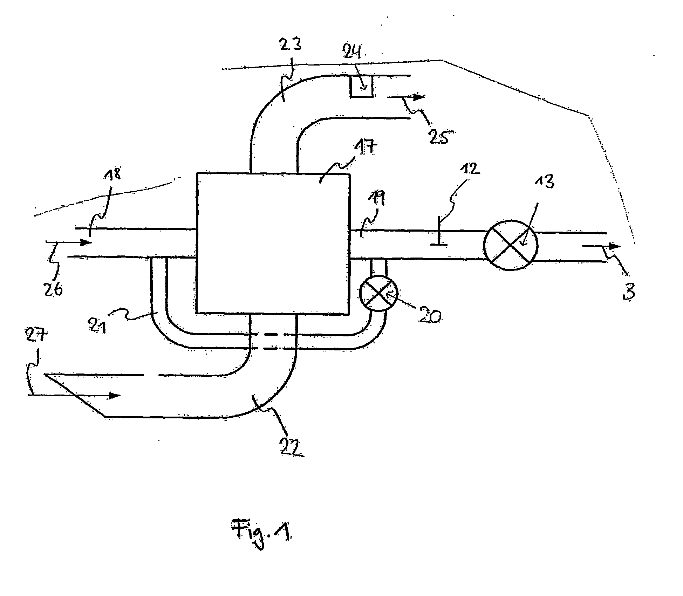

Fig. 1 shows a schematic representation of an air cooling device. The air cooling device is in particular used for cooling the bleed air 26 for the OBIGGS system (not shown in Fig. 1). The device essentially comprises a heat exchanger 17, which cools down the bleed air 26 fed to the system. Bleed air 26 is provided by engines or auxiliary turbines (APUs). Typically, the temperature of the bleed air 26 is approximately 200 °C, which temperature is reduced in the heat exchanger 17. To this effect the bleed air 26 is fed to the heat exchanger 17 by way of the inlet line 18, is cooled down and is subsequently fed to the OBIGGS as an air stream 3 by way of line 19. The heat exchanger 17 is air-cooled. In this arrangement air cooling takes place by way of the ram-air channel 22, 23. Furthermore, for ground operation a jet pump or a so-called "fan" 24 is provided so that a corresponding throughput of cooling air is ensured. Subsequently, the cooling air 25 is channelled to the environment.

A temperature sensor 12 is provided for monitoring the bleed air 26 cooled in the heat exchanger. Furthermore, by way of a safety device a so-called shut-off valve 13 is provided by means of which the flow 3 of bleed air to the OBIGGS can be stopped. Furthermore, the heat exchanger can be bypassed by way of the pipeline 21 and a bypass valve 20 so that temperature control becomes possible.

The quantity of bleed air and the pressure are regulated by means of the valve 13. The presence of the separate heat exchangers 17 and of the ram-air channel 22, 23 results in additional weight of the aircraft. Installation of the separate heat exchangers 17 and the ram-air channel 22, 23 in an existing aircraft can be associated with enormous problems. The additional ram-air channel 22, 23 causes additional aircraft resistance in flight. Two additional openings (inlet and outlet of the ram-air channel) weaken the structure and might require corresponding reinforcement, thus resulting in additional weight. Furthermore, the additional heat exchanger 17 involves additional maintenance expenditure.

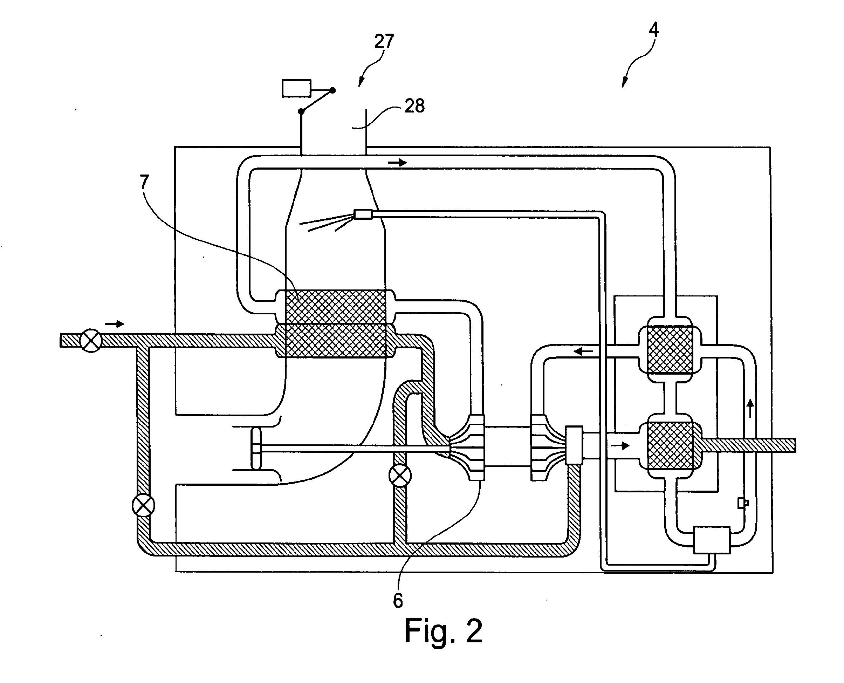

Fig. 2 is a schematic representation of an air conditioning unit which can be used to bleed air through an air supply system according to the invention. As shown in Fig. 2, the air conditioning unit 4 ("pack") of the air generation system (AGS) comprises a cooling circuit with a compressor 6 and a main heat exchanger 7. The air generation system in the aircraft serves to generate fresh air that is used for pressurising and air conditioning the aircraft cabin and the cockpit. Bleed air from engines or from auxiliary turbines is used as an air source for air generation. The hot bleed air (200 °C) is cooled and relaxed in the air generation system. External air, which during flight serves as ram air 27 from the ram-air channel 28, and which on the ground is provided by the air-cycle machine fan, is used for cooling. The air generation system AGS comprises two identical air conditioning units.

According to an embodiment of the present invention, within the air conditioning unit two positions are provided at which bleeding of air is possible. One position should provide air at a temperature that is higher than the temperature required by the OBIGGS, whereas the other position should provide air at a temperature that is lower than the temperature required by the OBIGGS. The pressure at these positions is to be higher than that required by the OBIGGS. For example, the first bleed position is the exit of the compressor 6, whereas the second bleed position is the exit of the main heat exchanger 7 of the air conditioning unit.

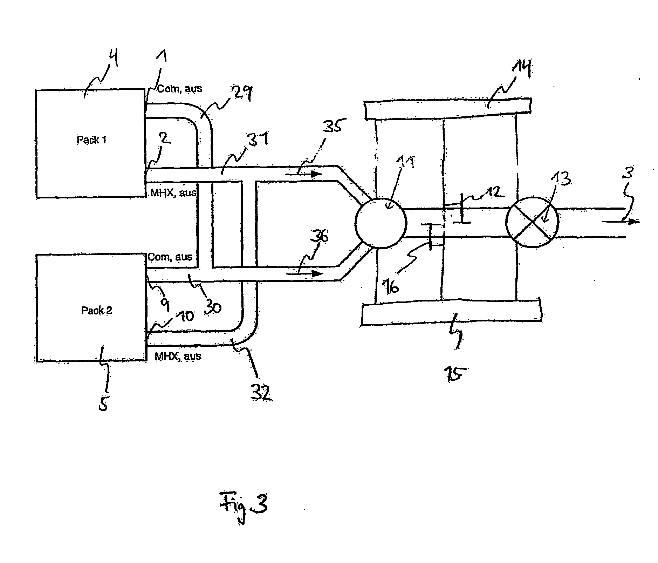

Fig. 3 is a schematic illustration of an air supply device according to an embodiment of the present invention. As shown in Fig. 3, the air supply device according to the invention comprises a first bleed position 1, a second bleed position 2, a third bleed position 9 and a fourth bleed position 10. Of course, further bleed positions can also be provided, for example at further air conditioning units. In this way redundancy is further increased.

By way of the first and second bleed position 1, 2, air can be bled from a first air conditioning unit 4. The air bled from bleed position 1 is air at the exit of the compressor 6 (see Fig. 2), having an increased temperature. The air which is bled by way of bleed position 2 is air from the main heat exchanger 7 (see Fig. 2), with the temperature of said air being relatively low. Likewise, warm air is bled by way of the third bleed position 9, and cold air is bled by way of the fourth bleed position 10 from the second air conditioning unit 5.

The terms "warm" and "cold" air or "increased" and "low" temperature refer to the temperature that is required by the OBIGGS system. The temperature is approximately 75°C, in each case however clearly less than 200°C.

By way of pipelines 29, 30, the hot bled air from the first and the second air conditioning unit 4, 5 can be brought together. Furthermore, by way of pipelines 31, 32 the cooler bled air from the two air conditioning units 4, 5 can be brought together. The direction of flow of the bled air is indicated by arrows 35, 36.

The following requirements apply to the bleed air that is provided to the OBIGGS system: depending on the aircraft type, a quantity of 0.01 to 0.12 kg per second has to be provided. The temperature is approximately 76°C ± 6°C, and the minimum pressure of the bleed air is approximately 1.7 bar (which is a relative pressure). Furthermore, for safety reasons the failure probability of the entire OBIGGS system (including air supply) must not be more than 10⁻⁴. A limiting value of 10⁻⁹ is provided for the so-called overheating probability (probability of the tank supply temperature exceeding 200 °C).

According to an embodiment of the present invention, these requirements are met by the overall system.

Supplying cooled bleed air to the OBIGGS can be ensured both on the ground and during flight if at least one air conditioning unit 4, 5 is switched on and works properly. This requires parallel bleeding of air from both units 4, 5, as shown in Fig. 3. The temperature necessary for the OBIGGS is however regulated by means of the three-way valve 11 and the temperature sensor 12. The quantity of bleed air and the pressure are regulated by means of the shut-off valve 13.

In order to minimise the failure probability and to maximise the availability of the system, redundancy of the air conditioning units 4, 5 and the temperature sensors 12, 16 is provided. In this way an overall failure probability of less than 10⁻⁴ can be ensured.

In order to minimise (less than 10⁻⁹) the probability of overheating the fuel tank, into which the generated nitrogen is introduced (not shown in Fig. 3), the following measures are taken:
Regulating the necessary bleed air temperature and the option of bleed air shutoff (by controlling and monitoring the temperature sensor 12, 16 of the three-way valve 11 and the shutoff valve 13) is handled by two controllers 14, 15 of different design types. In this context, the failure probability of the controllers 14, 15 is, in each case, less than 10⁻⁵. Furthermore, the temperature sensor 12, 16 is designed so as to be redundant. Likewise, the option of switching off or blocking off bleed air is designed so as to be redundant. This function is for example ensured by the three-way valve 11 and the shutoff valve 13. Bleed-air switchoff is handled by both valves.

In order to achieve additional safety for controlling the valves 11, 13 and measuring the temperature by means of temperature sensors 12, 16, the redundant controllers 14, 15 are of a different design type and furthermore are accommodated at different locations in the aircraft. Should one of the two controllers 14, 15 fail, the respective other controller 15, 14 can take over the function of the failed controller.

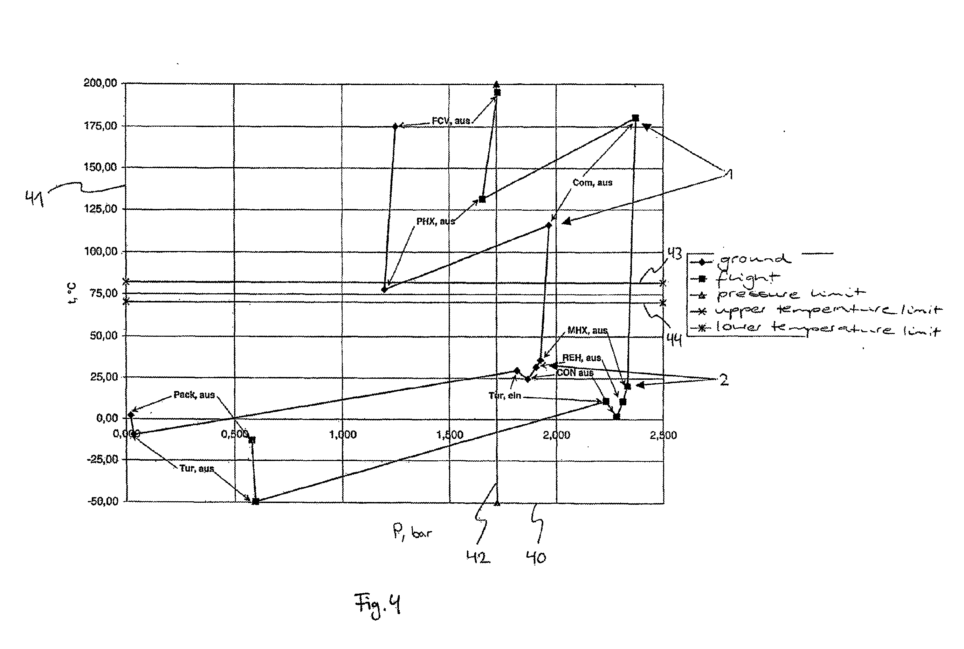

Fig. 4 shows the correlation between pressure and temperature at various locations within an air conditioning unit. The rhombus symbols show the corresponding pressures and temperatures within the unit on the ground when two units are used in engine operation on a hot day. The rectangle symbols show the development of the temperature and pressure at various locations within an air conditioning unit with the use of two air conditioning units used in engine operation on a hot day at an altitude of 39,000 feet. Fig. 4 shows that the above-mentioned conditions for bleeding the air are met for example at the following positions within the air conditioning unit:
- Compressor exit (Com, aus);
- Exit of the main heat exchanger (MHX, aus).

The horizontal axis 40 shows the pressure p in bar. The vertical axis 41 shows the temperature in degrees C. The pressure scale ranges from 0 hPa (0 bar) to 2500 hPa (2.5 bar). The temperature scale ranges from - 50°C to + 200°C.

As shown in the two graphs, the pressure and temperature of the air differs at different positions within the air conditioning unit. In particular the temperature of the air at the exit of the compressor, which is connected to bleed position 1, on the ground ranges from approximately 115°C to 120°C while the corresponding pressure of the air ranges from approximately 1800 to 1900 hPa (1.8 to 1.9 bar). In flight, the temperature at the exit of the compressor is approximately 180 °C and the corresponding pressure is approximately 2400 hPa (2.4 bar). At the exit of the main heat exchanger, which is bled by bleed position 2, on the ground the temperature is approximately 35 °C to 40°C and the pressure is 1800 to 1900 hPa (1.8 to 1.9 bar). In flight, the temperature at this point 2 is approximately 20 C and the pressure is 2300 to 2400 hPa (2.3 to 2.4bar).

The pressure required for supplying the OBIGGS system is shown by a vertical line 42, which is the minimum required pressure of the bleed air, which pressure is approximately 1700 hPa (1.7 bar) (relative pressure). The horizontal line 43 shows the upper temperature limit, whereas the horizontal line 44 shows the lower temperature limit of the bleed air fed to the OBIGGS. The temperature is approximately 76°C ± 6 °C. As can be seen from graph points 1 and 2, the values of the air bled at the exit of the compressor both during flight conditions and on the ground are above the upper temperature limit 43 and above the lower limiting pressure 42. Furthermore, the values of the air 2 bled at the main heat exchanger are above the lower limiting pressure 42 and below the lower temperature limit 44. The requirements for successful mixing of the two air quantities obtained from the two bleed positions 1, 2 are thus met.

Advantageously, the present invention provides a more compact solution that is lighter in weight for supplying the OBIGGS with bleed air. Compared to the conventional solution, the proposed solution does not have a separate heat exchanger and does not have a separate ram-air channel which provides a number of advantages. In particular, this does not entail additional aircraft weight. Furthermore, there is no above-average installation problem in existing aircraft. There is no additional aircraft resistance caused by an additional ram-air channel, and no additional reinforcement is necessary, and there is no additional weight of the structure in the region of two additional openings of a ram-air channel that would otherwise be required.

Implementation of the invention is not limited to the preferred embodiments shown in the figures. Instead, a multiplicity of variants are imaginable which use the solution shown and the principle according to the invention even in the case of fundamentally different embodiments.

## Claims

1. An air supply device for a system for generating inert gas in an aircraft, comprising:
a first bleed position (1);
wherein, by the first bleed position (1), first air is bleedable from a first air conditioning unit (4); and
wherein the first bled air is supplyable to the system for generating inert gas;
a second bleed position (2);
wherein, by the second bleed position (2), second air is bleedable from the first air conditioning unit (4);
wherein the first bled air has a first temperature;
wherein the second bled air has a second temperature; and
wherein the second bled air is mixable with the first bled air and, after completion of mixing, is supplyable to the system for generating inert gas;
a third bleed position (9) and a fourth bleed position (10);
a first valve (11);
wherein, by the third bleed position (9), third air is bleedable from a second air conditioning unit (5);
wherein, by the fourth bleed position (10), fourth air is bleedable from the second air conditioning unit (5);
wherein the third bled air has a third temperature;
wherein the fourth bled air has a fourth temperature;
wherein the third bled air is mixable with the fourth bled air and, on completion of mixing, is supplyable to the system for generating inert gas;
wherein the third bled air can be brought together with the first bled air prior to mixing by the first valve (11); and
wherein the fourth bled air can be brought together with the second bled air prior to mixing by the first valve (11).

2. The air supply device according to claim 1,
wherein the first temperature is higher than a temperature required for the system for generating inert gas;
wherein the second temperature is lower than the temperature required for the system for generating inert gas; and
wherein a first pressure of the first bled air and a second pressure of the second bled air are higher than a pressure required for the system for generating inert gas.

3. The air supply device according to claim 1 or 2,
wherein the first bleed position (1) is arranged at an exit of a compressor of the first air conditioning unit (4); and
wherein the second bleed position (2) is arranged at an exit of a main heat exchanger of the first air conditioning unit (4).

4. The air supply device according to any one of claims 1 to 3, further comprising:
a first temperature sensor (12);
wherein, by the first valve (11), a mixing ratio of first bled air to second bled air is controllable or regulable;
wherein, by the first valve (11), an air supply to the system for generating inert gas can be blocked off;
wherein, by the first temperature sensor (12) a fifth temperature is measurable; and
wherein the fifth temperature is the temperature of the air supplied to the system for generating inert gas.

5. The air supply device according to claim 1 to 4, further comprising:
a second valve (13);
wherein, by the second valve (13), the total quantity of first bled air and second bled air is controllable or regulable;
wherein, by the second valve (13), the air supply to the system for generating inert gas can be blocked off; and
wherein, if the first valve (11) fails, the second valve (13) takes over shutoff of the air supply to the OBIGGS of the first valve (11), and vice-versa.

6. The air supply device according to any one of claims 4 or 5, further comprising:
a first controller (14) and a second controller (15);
wherein the first controller (14) is of a design that differs from that of the second controller (15);
wherein the first or the second controller (15) controls or regulates the first valve (11) or the second valve (13) or measures the fifth temperature by the first temperature sensor (12); and
wherein, if the first controller (14) fails, the second controller (15) takes over the function of the first controller (14).

7. The air supply device according to any one of claims 4 to 6,
wherein a second temperature sensor is provided; and
wherein, if the first temperature sensor (12) fails, the second temperature sensor takes over the function of the first temperature sensor (12).

8. The use of an air supply device of any one of claims 1 to 7 in an aircraft.

9. An aircraft comprising an air supply device of any one of claims 1 to 7.

10. A method for supplying air of a system for generating inert gas in an aircraft, comprising the steps:
bleeding a first air from a first air conditioning unit (4) by a first bleed position (1); and
feeding the first bled air to the system for generating inert gas;
bleeding a second air from the first air conditioning unit (4) by a second bleed position (2);
mixing the first bled air with the second bled air;
supplying the mixture of first bled air and second bled air to the system for generating inert gas;
wherein the first bled air has a first temperature; and
wherein the second bled air has a second temperature;
bleeding a third air and a fourth air from a second air conditioning unit (5);
wherein the third bled air has a third temperature;
wherein the fourth bled air has a fourth temperature;
wherein the third bled air is mixable with the fourth bled air and, on completion of mixing, is supplyable to the system for generating inert gas;
wherein the third bled air is brought together with the first bled air prior to mixing by a first valve (11) so that the redundancy in the case of failure of an air conditioning unit is ensured; and
wherein the fourth bled air is brought together with the second bled air prior to mixing by the first valve (11) so that the redundancy in the case of failure of an air conditioning unit is ensured.

## Patentansprüche

1. Eine Luft-Zuführvorrichtung für ein System zum Erzeugen von Inertgas in einem Flugzeug, aufweisend:
eine erste Ausströmposition (1),
wobei durch die erste Ausströmposition (1) erste Luft von einer ersten Klimaanlage (4) ausströmbar ist, und
wobei die erste ausgeströmte Luft dem System zum Erzeugen von Inertgas zuführbar ist,
eine zweite Ausströmposition (2),
wobei durch die zweite Ausströmposition (2) zweite Luft von der ersten Klimaanlage (4) ausströmbar ist,
wobei die erste ausgeströmte Luft eine erste Temperatur aufweist,
wobei die zweite ausgeströmte Luft eine zweite Temperatur aufweist, und
wobei die zweite ausgeströmte Luft mischbar mit der ersten ausgeströmten Luft ist und nach Abschluss des Mischens dem System zum Erzeugen von Inertgas zuführbar ist,
eine dritte Ausströmposition (9) und eine vierte Ausströmposition (10),
ein erstes Ventil (11),
wobei durch die dritte Ausströmposition (9) dritte Luft von einer zweiten Klimaanlage (5) ausströmbar ist,
wobei durch die vierte Ausströmposition (10) vierte Luft von der zweiten Klimaanlage (5) ausströmbar ist,
wobei die dritte ausgeströmte Luft eine dritte Temperatur aufweist,
wobei die vierte ausgeströmte Luft eine vierte Temperatur aufweist,
wobei die dritte ausgeströmte Luft mischbar mit der vierten ausgeströmten Luft ist und nach Abschluss des Mischens dem System zum Erzeugen von Inertgas zuführbar ist,
wobei die dritte ausgeströmte Luft mit der ersten ausgeströmten Luft vor dem Mischen durch das erste Ventil (11) zusammengebracht werden kann, und
wobei die vierte ausgeströmte Luft mit der zweiten ausgeströmten Luft vor dem Mischen durch das erste Ventil (11) zusammengebracht werden kann.

2. Die Luft-Zuführvorrrchtung gemäß Anspruch 1,
wobei die erste Temperatur höher als eine Temperatur ist, die erforderlich für das System zum Erzeugen von Inertgas ist,
wobei die zweite Temperatur niedriger als die Temperatur ist, die erforderlich für das System zum Erzeugen von Inertgas ist, und
wobei ein erster Druck der ersten ausgeströmten Luft und ein zweiter Druck der zweiten ausgeströmten Luft höher sind als ein Druck, der erforderlich ist für das System zum Erzeugen von Inertgas.

3. Die Luft-Zuführvorrichtung gemäß Anspruch 1 oder 2,
wobei die erste Ausströmposition (1) an einem Ausgang eines Kompressors von der ersten Klimaanlage (4) angeordnet ist, und
wobei die zweite Ausströmposition (2) an einem Ausgang eines Haupt-Wärmetauschers von der ersten Klimaanlage (4) angeordnet ist.

4. Die Luft-Zuführvorrichtung gemäß einem der Ansprüche 1 bis 3, ferner aufweisend:
einen ersten Temperatursensor (12),
wobei durch das erste Ventil (11) ein Mischungsverhältnis von erster ausgeströmter Luft zu zweiter ausgeströmter Luft steuerbar oder regulierbar ist,
wobei durch das erste Ventil (11) eine Luftzuführung zu dem System zum Erzeugen von Inertgas blockiert werden kann,
wobei durch den ersten Temperatursensor (12) eine fünfte Temperatur messbar ist, und
wobei die fünfte Temperatur die Temperatur der Luft ist, die dem System zum Erzeugen von Inertgas zugeführt wird.

5. Die Luft-Zuführvorrichtung gemäß einem der Ansprüche 1 bis 4, ferner aufweisend:
ein zweites Ventil (13),
wobei durch das zweite Ventil (13) die gesamte Menge der ersten ausgeströmten Luft und der zweiten ausgeströmten Luft steuerbar oder regulierbar ist,
wobei durch das zweite Ventil (13) die Luftzuführung zu dem System zum Erzeugen von Inertgas blockiert werden kann, und
wobei, wenn das erste Ventil (11) ausfällt, das zweite Ventil (13) ein Abstellen der Luftzuführung zu den OBIGGS des ersten Ventils (11) übernimmt, und umgekehrt.

6. Die Luft-Zuführvorrichtung gemäß einem der Ansprüche 4 oder 5, ferner aufweisend:
eine erste Steuereinheit (14) und eine zweite Steuereinheit (15),
wobei die erste Steuereinheit (14) anders gestaltet ist als die zweite Steuereinheit (15),
wobei die erste oder die zweite Steuereinheit (15) das erste Ventil (11) oder das zweite Ventil (13) steuert oder regelt oder die fünfte Temperatur durch den ersten Temperatursensor (12) misst, und
wobei, wenn die erste Steuereinheit (14) ausfällt, die zweite Steuereinheit (15) die Funktion der ersten Steuereinheit (14) übernimmt.

7. Die Luft-Zuführvorrichtung gemäß einem der Ansprüche 4 bis 6,
wobei ein zweiter Temperatursensor bereitgestellt ist, und
wobei, wenn der erste Temperatursensor (12) ausfällt, der zweite Temperatursensor die Funktion des ersten Temperatursensors (12) übernimmt.

8. Verwendung einer Luft-Zuführvorrichtung gemäß einem der Ansprüche 1 bis 7 in einem Flugzeug.

9. Flugzeug mit einer Luft-Zuführvorrichtung gemäß einem der Ansprüche 1 bis 7.

10. Verfahren zum Zuführen von Luft von einem System zum Erzeugen von Inertgas in einem Flugzeug, die Schritte aufweisend:
Ausströmen einer ersten Luft von einer ersten Klimaanlage (4) durch eine erste Ausströmposition (1), und
Zuführen der ersten ausgeströmten Luft zu dem System zum Erzeugen von Inertgas,
Ausströmen einer zweiten Luft von der ersten Klimaanlage (4) durch eine zweite Ausströmposition (2),
Mischen der ersten ausgeströmten Luft mit der zweiten ausgeströmten Luft,
Zuführen der Mischung der ersten ausgeströmten Luft und der zweiten ausgeströmten Luft zu dem System zum Erzeugen von Inertgas,
wobei die erste ausgeströmte Luft eine erste Temperatur aufweist, und
wobei die zweite ausgeströmte Luft eine zweite Temperatur aufweist,
Ausströmen einer dritten Luft und einer vierten Luft von einer zweiten Klimaanlage (5),
wobei die dritte ausgeströmte Luft eine dritte Temperatur aufweist,
wobei die vierte ausgeströmte Luft eine vierte Temperatur aufweist,
wobei die dritte ausgeströmte Luft mischbar mit der vierten ausgeströmten Luft ist und nach Abschluss der Mischung dem System zur Erzeugung von Inertgas zuführbar ist,
wobei die dritte ausgeströmte Luft mit der ersten ausgeströmten Luft vor dem Mischen durch ein erstes Ventil (11) zusammengebracht wird, so dass die Redundanz im Fall eines Ausfalls einer Klimaanlage sichergestellt ist, und
wobei die vierte ausgeströmte Luft mit der zweiten ausgeströmten Luft vor dem Mischen durch das erste Ventil (11) zusammengebracht wird, so dass die Redundanz im Fall eines Ausfalls einer Klimaanlage sichergestellt ist.

## Revendications

1. Dispositif d'alimentation en air pour un système afin de produire du gaz inerte dans un avion, comportant :
une première position de prélèvement (1),
dans lequel, par l'intermédiaire de la première position de prélèvement ( 1), un premier air peut être prélevé d'une première unité de conditionnement d'air (4), et
dans lequel le premier air prélevé peut-être délivré au système pour produire du gaz inerte,
une deuxième position de prélèvement (2),
dans lequel, par l'intermédiaire de la deuxième position de prélèvement (2), un deuxième air peut être prélevé de la première unité de conditionnement d'air (4),
dans lequel le premier air prélevé a une première température,
dans lequel le deuxième air prélevé a une deuxième température, et
dans lequel le deuxième air prélevé peut-être mélangé au premier air prélevé et, après la fin du mélange, peut-être délivré au système afin de produire du gaz inerte, une troisième position de prélèvement (9) et une quatrième position de prélèvement (10),
une première soupape (11),
dans lequel par l'intermédiaire de la troisième position de prélèvement (9), un troisième air peut être prélevé d'une deuxième unité de conditionnement d'air (5),
dans lequel, par l'intermédiaire de la quatrième position de prélèvement (10), un quatrième air peut être prélevé de la deuxième unité de conditionnement d'air (5),
dans lequel le troisième air prélevé a une troisième température,
dans lequel le quatrième air prélevé a une quatrième température,
dans lequel le troisième air prélevé peut-être mélangé au quatrième air prélevé et, à la fin du mélange, peut être délivré au système afin de produire du gaz inerte,
dans lequel le troisième air prélevé peut-être mis en contact avec le premier air prélevé avant le mélange par la première soupape (11), et
dans lequel le quatrième air prélevé peut-être mis en contact avec le deuxième air prélevé avant le mélange par la première soupape (11).

2. Dispositif d'alimentation en air selon la revendication 1,
dans lequel la première température est supérieure à une température requise pour le système afin de produire du gaz inerte,
dans lequel la deuxième température est inférieure à la température requise pour le système afin de produire du gaz inerte, et
dans lequel une première pression du premier air prélevé et une deuxième pression du deuxième air prélevé sont supérieures à une pression requise pour le système afin de produire du gaz inerte.

3. Dispositif d'alimentation en air selon la revendication 1 ou 2,
dans lequel la première position de prélèvement (1) est agencée au niveau d'une sortie d'un compresseur de la première unité de conditionnement d'air (4), et
dans lequel la deuxième position de prélèvement (2) est agencée au niveau d'une sortie d'un échangeur de chaleur principal de la première unité de conditionnement d'air (4).

4. Dispositif d'alimentation en air selon l'une quelconque des revendications 1 à 3, comportant en outre :
une première sonde de température (12),
dans lequel, par l'intermédiaire de la première soupape (11), un rapport de mélange du premier air prélevé sur le deuxième air prélevé peut-être commandé ou régulé,
dans lequel, par l'intermédiaire de la première soupape (11), une alimentation en air du système afin de produire du gaz inerte peut-être bloquée,
dans lequel, par l'intermédiaire de la première sonde de température (12) une cinquième température est mesurable, et
dans lequel la cinquième température est la température de l'air délivré au système afin de produire du gaz inerte.

5. Dispositif d'alimentation en air selon la revendication 1 à 4, comportant en outre :
une deuxième soupape (13),
dans lequel, par l'intermédiaire de la deuxième soupape (13), la quantité totale du premier air prélevé et du deuxième air prélevé peut-être commandée ou régulée,
dans lequel, par l'intermédiaire de la deuxième soupape (13), l'alimentation en air du système afin de produire du gaz inerte peut être bloquée, et
dans lequel, si la première soupape (11) est défaillante, la deuxième soupape (13) palie à l'arrêt de l'alimentation en air du système OBIGGS de la première soupape (11), et vice versa.

6. Dispositif d'alimentation en air selon l'une quelconque des revendications 4 ou 5, comportant en outre :
un premier dispositif de commande (14) et un second dispositif de commande (15), dans lequel le premier dispositif de commande (14) est d'une conception qui diffère de celle du second dispositif de commande (15),
dans lequel le premier ou le second dispositif de commande (15) commande ou régule la première soupape (11) ou la deuxième soupape (13) mesure la cinquième température par l'intermédiaire de la première sonde de température (12), et
dans lequel, si le premier dispositif de commande (14) est défaillant, le second dispositif de commande (15) prend en charge la fonction du premier dispositif de commande (14).

7. Dispositif d'alimentation en air selon l'une quelconque des revendications 4 à 6,
dans lequel une seconde sonde de température est fournie, et
dans lequel, si la première sonde de température (12) est défaillante, la seconde sonde de température prend en charge la fonction de la première sonde de température (12).

8. Utilisation d'un dispositif d'alimentation en air selon l'une quelconque des revendications 1 à 7 dans un avion.

9. Avion comportant un dispositif d'alimentation en air selon l'une quelconque des revendications 1 à 7.

10. Procédé pour délivrer de l'air d'un système afin de produire du gaz inerte dans un avion, comportant les étapes consistant à :
prélever un premier air d'une première unité de conditionnement d'air (4) par l'intermédiaire d'une première position de prélèvement (1), et
délivrer le premier air prélevé au système afin de produire du gaz inerte,
prélever un deuxième air de la première unité de conditionnement d'air (4) par l'intermédiaire d'une deuxième position de prélèvement (2),
mélanger le premier air prélevé au deuxième air prélevé,
délivrer le mélange du premier air prélevé et du deuxième air prélevé au système afin de produire du gaz inerte,
dans lequel le premier air prélevé a une première température, et
dans lequel le deuxième air prélevé a une deuxième température,
prélever un troisième air et un quatrième air d'une seconde unité de conditionnement d'air (5),
dans lequel le troisième air prélevé a une troisième température,
dans lequel le quatrième air prélevé a une quatrième température,
dans lequel le troisième air prélevé peut-être mélangé au quatrième air prélevé et, à la fin du mélange, peut être délivré au système afin de produire du gaz inerte,
dans lequel le troisième air prélevé est mis en contact avec le premier air prélevé avant le mélange par l'intermédiaire d'une première soupape (11) de sorte que la redondance dans le cas d'une défaillance d'une unité de conditionnement d'air est garantie, et
dans lequel le quatrième air prélevé est mis en contact avec le deuxième air prélevé avant le mélange par l'intermédiaire de la première soupape (11) de sorte que la redondance dans le cas d'une défaillance d'unité de conditionnement d'air est garantie.
